(19)

Europäisches
Patentamt
European
Patent Office
Office européen
des brevets

(11) **EP 3 007 076 A1**

(12) **EUROPEAN PATENT APPLICATION**
published in accordance with Art. 153(4) EPC

(43) Date of publication:
**13.04.2016 Bulletin 2016/15**

(21) Application number: **14803390.5**

(22) Date of filing: **20.05.2014**

(51) Int Cl.:
**G06F 17/28** (2006.01)

(86) International application number:
**PCT/JP2014/063387**

(87) International publication number:
**WO 2014/192598 (04.12.2014 Gazette 2014/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.05.2013 JP 2013113397**

(71) Applicant: **National Institute of Information
and Communication Technology
Tokyo 184-8795 (JP)**

(72) Inventor: **GOTO, Isao
Koganei-shi
Tokyo 184-8795 (JP)**

(74) Representative: **Betten & Resch
Patent- und Rechtsanwälte PartGmbB
Maximiliansplatz 14
80333 München (DE)**

(54) **TRANSLATION WORD ORDER INFORMATION OUTPUT DEVICE, TRANSLATION WORD ORDER INFORMATION OUTPUT METHOD, AND RECORDING MEDIUM**

(57) In order to solve a conventional problem that, in statistical translation, it is difficult to accurately determine the word order in translation, a translation word order information output apparatus includes: a sentence storage unit in which a source language sentence can be stored; a weight vector storage unit in which a weight vector can be stored! a receiving unit that receives a current word position of a current word, which is a word that is currently being translated; a candidate acquiring unit that acquires the current word position and one or more next word position candidates, each of which is a candidate for a word that is to be translated following the current word, from the source language sentence; a vector acquiring unit that acquires a vector having two or more elements, using the current word, a next word candidate, and the source language sentence; a probability information acquiring unit that acquires, for each of the one or more next word position candidates, probability information regarding a probability that a word at that next word position candidate is a next word that is to be translated following the current word, using the vector and the weight vector; and an output unit that outputs the probability information. Accordingly, in a state where a word that is currently being translated in a source language sentence is known, a word that is to be translated next can be accurately determined.

FIG.1

EP 3 007 076 A1

**Description**

Technical Field

The present invention relates to a translation word order information output apparatus and the like for assisting determination of the word order in translation.

Background Art

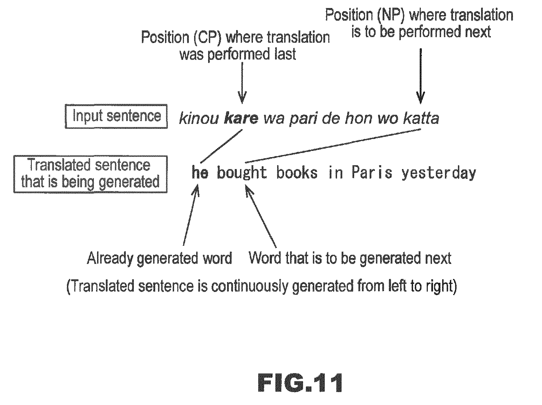

Major issues in machine translation are word selection and word order estimation. For example, since statistical translation has high performance for word selection, a current major issue in statistical translation is word order estimation. In phrase-based statistical translation, which is one of machine translation methods, there is a typical translation algorithm in which a sentence in a target language is continuously generated from left (beginning of sentence) to right (end of sentence). In this case, in a state where a position (CP) at which translation is currently being performed in an input sentence is known, a position (NP) at which translation is to be performed next in the input sentence has to be estimated. Examples of the CP and the NP are shown in FIG. 11. Note that the CP refers to a position at which translation is currently being performed in an input sentence, and may be considered as a word at that position. Hereinafter, the word at that position is referred to as a current word as appropriate. The NP refers to a position at which translation is to be performed next in the input sentence, and may be considered as a word at that position. Hereinafter, the word at that position is referred to as a next word as appropriate.

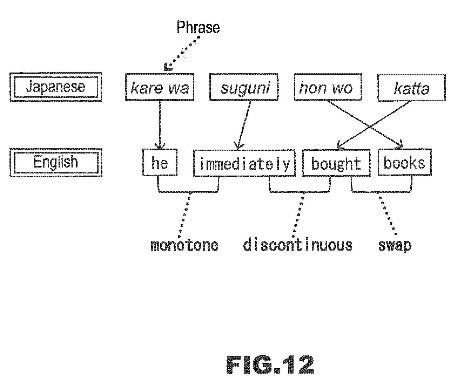

In conventional techniques, an NP is estimated mainly based on a lexical reordering model (see Non-Patent Document 1, for example). The lexical reordering model calculates a probability of a relationship with an NP among monotone, swap, and discontinuous. Monotone refers to a relationship in which the CP and the NP are continuous, swap refers to a relationship in which the word order between the CP and the NP is switched around, and discontinuous refers to a relationship in which the CP and the NP are discontinuous (see FIG. 12).

Furthermore, a technique has been proposed that estimates an NP using a model for estimating a distortion class probability (see Non-Patent Document 2, for example). In this conventional technique, a distance to an NP is estimated using a word at a CP and its surrounding words. The distance is expressed using a distortion class. If a CP is taken as i and an NP candidate is taken as j, distortion is defined as j-i-1. Non-Patent Document 2 describes the distortion class as nine classes for classifying distortion as follows: $(-\infty, -8)$, $[-7, -5]$, $[-4, -3]$, $-2$, $0$, $1$, $[2, 3]$, $[4, 6]$, and $[7, \infty]$. Note that distortion, distortion classes, and the like are examples of information on a distance and a relative word order between a CP and an NP candidate described later.

Also, it has been proposed to use a model that, using a word at an NP candidate and its surrounding words, estimates a probability indicating how far the CP has to be from the NP in the case where the word at that NP candidate is at the NP.

Citation List

Non-Patent Document

[Non-Patent Document 1] Christoph Tillman. 2004. A unigram orientation model for statistical machine translation. HLT-NAACL 2004: Short Papers, pages 101-104, Boston, Massachusetts, USA, May 2 - May 7. Association for Computational Linguistics.
[Non-Patent Document 2] Spence Green, Michel Galley, and Christopher D. Manning. 2010. Improved models of distortion cost for statistical machine translation. In Human Language Technologies: The 2010 Annual Conference of the North American Chapter of the Association for Computational Linguistics, pages 867-875, Los Angeles, California, June. Association for Computational Linguistics.

Disclosure of Invention

Problems to be Solved by the Invention

However, according to conventional translation word order information output apparatuses, in statistical translation, in a state where a position of a word that is currently being translated in a source language sentence is known, it is difficult to accurately determine a position of a word that is to be translated next.

More specifically, since the lexical reordering model merely uses a probability of "discontinuous" and cannot specify an NP that is far from a CP, it is difficult for this model to precisely perform word order estimation between languages with significantly different word orders.

Since the model for estimating a distortion class probability does not simultaneously consider a word at a CP and a word at an NP candidate, it is impossible for this model to correctly estimate an NP.

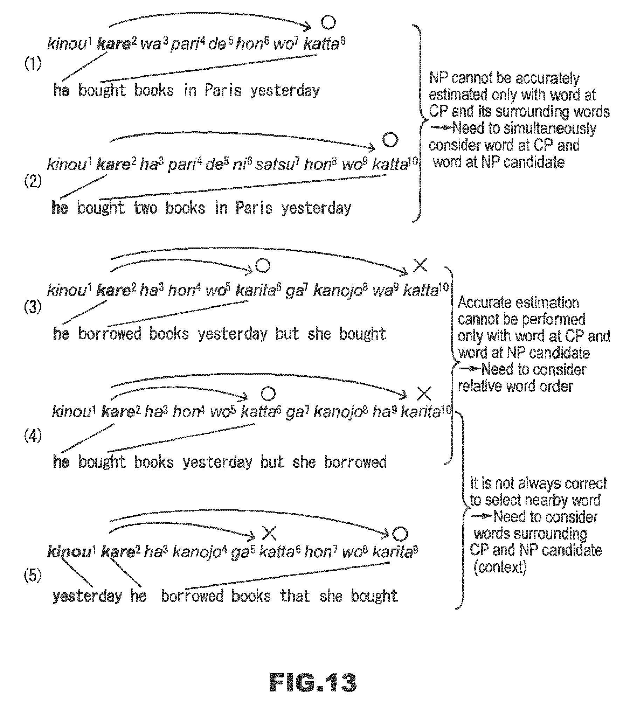

The problem that the word order estimation is difficult as described above is summarized in FIG. 13. The examples (1) and (2) in FIG. 13 are examples in which an NP cannot be correctly estimated only with a word at a CP and its surrounding words. That is to say, in (1) and (2), a word in the target language corresponding to the word "*kare*" ("*kare*" at the CP) in the source language is "he", and a word at the NP is "*katta*". In order to acquire "*katta*" at the NP, it is necessary to simultaneously consider the word at the CP and a word at an NP candidate. That is to say, in the examples (1) and (2), it is necessary to simultaneously consider a word at a CP and a word at an NP candidate.

Furthermore, the examples (3) and (4) in FIG. 13 are examples in which correct estimation cannot be performed only with a word at a CP and a word at an NP candidate. That is to say, in (3), if the word at the CP is "*kare*", the word at the NP is not "*katta*" but "*karita*". In (4), if the word at the CP is "*kare*", the word at the NP is not "*karita*" but "*katta*". That is to say, in the examples (3) and (4), it is necessary to consider a relative word order.

Furthermore, the examples (4) and (5) in FIG. 13 are examples in which it is not always correct to select a nearby word. In (4), if the word at the CP is "*kare*", the word at the NP is "*katta*", whereas, in (5), if the word at the CP is "*kare*", the word at the NP is "*karita*". That is to say, in the examples (4) and (5), it is necessary to consider words surrounding a CP and an NP candidate.

Means for Solving the Problems

A first aspect of the present invention is directed to a translation word order information output apparatus, including: a sentence storage unit in which a source language sentence, which is a sentence in a source language that is to be translated, can be stored; a weight vector storage unit in which a weight vector indicating a weight of each element of a vector can be stored; a receiving unit that receives a current word position, which is one word position in the source language sentence and is a position of a word that is currently being translated; a candidate acquiring unit that acquires the current word position and one or more next word position candidates, each of which is a position of a word that is a candidate for a word that is to be translated following the current word, from the source language sentence; a vector acquiring unit that acquires a vector having two or more elements, discriminatively using a current word indicated by the current word position, a next word candidate indicated by each of the next word position candidates, and one or more intermediate words, each of which is a word between the current word and the next word candidate; a probability information acquiring unit that acquires, for each of the one or more next word position candidates acquired by the candidate acquiring unit, probability information regarding a probability that a word at that next word position candidate is a next word that is to be translated following the current word, using the vector acquired by the vector acquiring unit and the weight vector; and an output unit that outputs the probability information acquired by the probability information acquiring unit.

With this configuration, in a state where a position of a word that is currently being translated in a source language sentence is known, a position of a word that is to be translated next can be accurately determined.

Furthermore, a second aspect of the present invention is directed to the translation word order information output apparatus according to the first aspect, wherein the vector acquiring unit includes: a source information acquiring part that acquires source information having the current word, one or more current word-surrounding words including a word immediately before the current word or a word immediately after the current word, the next word candidate, one or more next word-surrounding words including a word immediately before the next word candidate or a word immediately after the next word candidate, word order information, which is information regarding a relative word order between the current word and the next word candidate in the source language sentence, distance information, which is information regarding a distance between the current word and the next word candidate in the source language sentence, and one or more intermediate words, each of which is a word between the current word and the next word candidate; and a vector acquiring part that acquires a vector having two or more elements, using the source information acquired by the source information acquiring part.

With this configuration, in a state where a word that is currently being translated in a source language sentence is known, a word that is to be translated next can be accurately determined.

Furthermore, a third aspect of the present invention is directed to the translation word order information output apparatus according to the first aspect, wherein the vector acquiring unit includes: a source information acquiring part that acquires source information having the current word, one or more current word-surrounding words including a word immediately before the current word or a word immediately after the current word, the next word candidate, one or more next word-surrounding words including a word immediately before the next word candidate or a word immediately after the next word candidate, word order information, which is information regarding a relative word order between the current word and the next word candidate in the source language sentence, and distance information, which is information regarding a distance between the current word and the next word candidate in the source language sentence; and a vector acquiring part that acquires a vector having two or more elements, using the source information acquired by the source information acquiring part.

With this configuration, in a state where a word that is currently being translated in a source language sentence is known, a word that is to be translated next can be more accurately determined.

Furthermore, a fourth aspect of the present invention is directed to a machine translation apparatus, including a word pair dictionary in which two or more word pairs, each of which is a pair of a word in a source language and a word in a target language, can be stored; the above-described translation word order information output apparatus; a target language word acquiring unit that determines a next word from the probability information of the one or more next word candidates output by the translation word order information output apparatus, and acquires a word in the target language corresponding to the next word from the word pair dictionary; a target language sentence constructing unit that constructs a target language sentence from one or more words in the target language acquired by the target language word acquiring unit; and a target language sentence output unit that outputs the target language sentence constructed by the target language sentence constructing unit.

With this configuration, precise machine translation can be performed.

Furthermore, a fifth aspect of the present invention is directed to a learning apparatus, including: a weight vector storage unit in which a weight vector indicating a weight of each element of a vector can be stored; a parallel corpus storage unit in which a parallel corpus composed of two or more pairs of original and translated sentences, each of which is a pair of a source language sentence and a target language sentence, can be stored; a word alignment information storage unit in which word alignment information, which is information indicating a correspondence between a word forming a source language sentence and a word forming a target language sentence, can be stored; a learning unit that acquires a current word position indicating a position of a current word and a next word position indicating a position of a next word of each target language sentence while moving the current word of that target language sentence from left to right, in each of two or more target language sentences contained in the two or more pairs of original and translated sentences, acquires a current word position indicating a position of a current word, a next word position indicating a position of a next word, and all next word position candidates other than the next word position in each source language sentence corresponding to a current word position and a next word position in each target language sentence, using the word alignment information, acquires one or at least two features regarding a current word position, a next word position, and all next word position candidates in each source language sentence, and determines a weight vector so as to maximize the entropy, using the acquired features, thereby acquiring the weight vector; and a weight vector accumulating unit that accumulates the weight vector acquired by the learning unit, in the weight vector storage unit.

With this configuration, a weight vector used for performing precise machine translation can be learned.

Effect of the Invention

According to the translation word order information output apparatus of the present invention, in machine translation, the word order in translation can be accurately determined.

Brief Description of the Drawings

FIG. 1 is a block diagram of a translation word order information output apparatus 1 in Embodiment 1.
FIG. 2 is a flowchart illustrating an operation of the translation word order information output apparatus 1 in Embodiment 1.
FIG. 3 is a diagram showing label sequences in the Sequence model in Embodiment 1.
FIG. 4 is a block diagram of a machine translation apparatus 2 in Embodiment 2.
FIG. 5 is a block diagram of a learning apparatus 3 in Embodiment 3.
FIG. 6 is a flowchart illustrating an operation of the learning apparatus 3 in Embodiment 3.
FIG. 7 is a table showing experimental results in Embodiment 3.
FIG. 8 is a graph showing other experimental results in Embodiment 3.
FIG. 9 is a schematic view of a computer system in the foregoing embodiments.
FIG. 10 is a block diagram of the computer system in the embodiments.
FIG. 11 is a diagram showing an example of a CP and an NP in conventional techniques.
FIG. 12 is a diagram illustrating a lexical reordering model in conventional techniques.
FIG. 13 is a diagram illustrating problems in conventional techniques.

Description of Embodiments

Hereinafter, embodiments of a translation word order information output apparatus and the like will be described with reference to the drawings. Note that constituent elements denoted by the same reference numerals perform similar operations in the embodiments, and, thus, a description thereof may not be repeated.

Embodiment 1

This embodiment will describe a translation word order information output apparatus with which, in a state where a word that is currently being translated in a source language sentence is known, a word that is to be translated next can be accurately determined. In this specification, "word" is typically a single word, but may be multiple words, a phrase, or the like. The translation word order information output apparatus is typically for use in statistical translation.
Furthermore, this translation word order information output apparatus uses Pair model, Sequence model, or the like (described later).

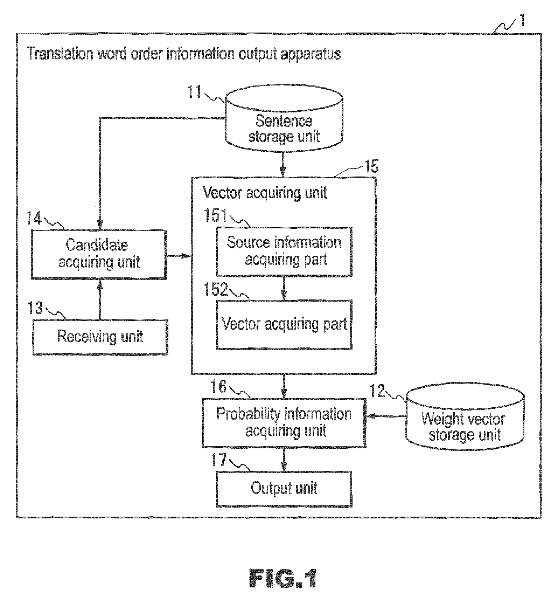

FIG. 1 is a block diagram of a translation word order information output apparatus 1 in this embodiment. The translation word order information output apparatus 1 includes a sentence storage unit 11, a weight vector storage unit 12, a receiving unit 13, a candidate acquiring unit 14, a vector acquiring unit 15, a probability information acquiring unit 16, and an output unit 17.
The vector acquiring unit 15 includes a source information acquiring part 151 and a vector acquiring part 152.
In the sentence storage unit 11, one or at least two source language sentences can be stored. The source language sentences are sentences in a source language that are to be translated.
In the weight vector storage unit 12, a weight vector indicating a weight of each element of a vector can be stored. The vector is information having two or more elements acquired using two or more feature functions using source information (described later) as an argument. The feature functions are preferably binary feature functions. For example, a feature function f where a word at a CP is si and a word at an NP candidate is sj is as Equation 1 below, when the features in the feature function are si = "*kare*" and $s_j$ = "*katta*":

$$ f = \begin{cases} 1 & (s_i = kare, s_j = katta) \\ 0 & (else) \end{cases} $$

<div align="right">Equation 1</div>

The weight vector is, for example, a vector learned by a learning apparatus, which will be described in Embodiment 2.
The receiving unit 13 receives a position of a current word, which is a word in a source language sentence and is a word that is currently being translated. The position of a current word is referred to as a current word position. The word that is currently being translated may be referred to as a word that was translated last. The word is typically a single word, but may be a phrase or the like. The word is a portion aligned together constituting a sentence. The receiving is a concept that encompasses receiving from software, receiving information transmitted via a wired or wireless communication line, receiving information read from a storage medium such as an optical disk, a magnetic disk, or a semiconductor memory, receiving information input from an input device such as a keyboard, a mouse, or a touch panel, and the like.
The candidate acquiring unit 14 acquires the current word position and one or more next word position candidates, from the source language sentence. Each of the next word position candidates is a position of a word that is a candidate for a word that is to be translated following the current word. The candidate acquiring unit 14 may acquire positions of all words other than the current word in the source language sentence, as the next word position candidates. The candidate acquiring unit 14 may acquire positions of all words other than the current word and BOS (information indicating the beginning of the sentence) in the source language sentence, as the next word position candidates. The candidate acquiring unit 14 may acquire one or more words in the source language sentence, except for the current word and translated words that have been already translated in the source language sentence, as the next word candidates.
The vector acquiring unit 15 acquires a vector having two or more elements, using a current word, a next word candidate, and a source language sentence.
Furthermore, the vector acquiring unit 15 preferably acquires a vector having two or more elements, using one or more intermediate words as well, each of which is a word in the source language sentence and is a word between the current word and the next word candidate. In this case, the vector acquiring unit 15 acquires a vector typically discriminatively using a current word, a next word candidate, and an intermediate word. The vector acquiring unit 15 labels, for example, the current word as "0", the intermediate word as "1", and the next word candidate as "2". For example, the vector acquiring unit 15 constructs a label sequence consisting of "0", "1", and "2", and acquires a vector using this label sequence.

Moreover, the vector acquiring unit 15 acquires a vector typically using two or more feature functions. The feature functions are, for example, binary feature functions, but may be other feature functions.

The source information acquiring part 151 forming the vector acquiring unit 15 acquires source information. The source information is information necessary to acquire the vector. The source information has, for example, a current word, one or more current word-surrounding words, a next word candidate, one or more next word-surrounding words, word order information, and distance information.

The current word-surrounding words are one or more words including a word immediately before the current word or a word immediately after the current word. The current word-surrounding words are typically continuous words in the source language sentence, including a word immediately before the current word or a word immediately after the current word. The current word-surrounding words are preferably two or more words including a word immediately before the current word and a word immediately after the current word. The current word-surrounding words are, for example, four words consisting of two words immediately before the current word and two words immediately after the current word in the source language sentence.

Furthermore, the next word-surrounding words are words including one or more words including a word immediately before the next word candidate or a word immediately after the next word candidate. The next word-surrounding words are typically continuous words in the source language sentence, including a word immediately before the next word or a word immediately after the next word. The next word-surrounding words are preferably two or more words including a word immediately before the next word candidate and a word immediately after the next word candidate. The next word-surrounding words are, for example, four words consisting of two words immediately before the next word and two words immediately after the next word in the source language sentence.

Furthermore, the word order information is information regarding a relative word order between the current word and the next word candidate in the source language sentence. The word order information is, for example, a flag indicating whether the current word is on the left side or on the right side of the next word candidate. For example, if the current word is on the left side of the next word candidate, the word order information is "0", and, if the current word is on the right side of the next word candidate, the word order information is "1".

Moreover, the distance information is information regarding a distance between the current word and the next word candidate in the source language sentence. The distance information is typically information indicating a class obtained by classifying the distance between the current word and the next word candidate in the source language sentence. As the distance information, the distance between the current word and the next word candidate in the source language sentence may be used as it is. In the case where the distance information is information indicating a class as described above, for example, if the distance is "1" (i.e., if the current word and the next word candidate are adjacent to each other), the distance information is "0", if the distance is "2 or more and 5 or less", the distance information is "1", and, if the distance is "6 or more", the distance information is "2". In this case, the number of classes is 3, but may be 4, 5, or the like.

Furthermore, the source information may further have, for example, one or more words between the current word and the next word candidate. It will be appreciated that the source information may have information other than those described above.

The vector acquiring part 152 acquires a vector having two or more elements, using the source information acquired by the source information acquiring part 151. The vector acquiring part 152 acquires a vector typically using two or more feature functions. The feature functions are preferably binary feature functions.

Furthermore, the vector acquiring part 152 acquires a vector having, as an element, for example, a return value from a feature function in which two or more pieces of information forming the source information are parameters. That is to say, the vector acquiring part 152 gives each pieces of information forming the source information acquired by the source information acquiring part 151 to a predetermined feature function, and executes the feature function, thereby acquiring an execution result. The vector acquiring part 152 acquires a vector having this execution result as an element.

The probability information acquiring unit 16 acquires, for each of the one or more next word position candidates, probability information using the vector acquired by the vector acquiring unit 15 and a weight vector (w) in the weight vector storage unit 12. The probability information is information regarding a probability that each of the one or more next word position candidates acquired by the candidate acquiring unit 14 is a position of a next word that is to be translated following the current word (next word position).

The probability information acquiring unit 16 acquires, for each of the one or more next word position candidates, probability information typically using an inner product of the vector acquired by the vector acquiring unit 15 and the weight vector (it may be a transposed vector of the weight vector). The probability information acquiring unit 16 preferably acquires probability information using an exponential function of the product. That is to say, the probability information acquiring unit 16 preferably acquires probability information using exp(product of the vector acquired by the vector acquiring unit 15 and the weight vector). Moreover, the probability information acquiring unit 16 preferably normalizes an execution result of the exponential function of the product. That is to say, the probability information acquiring unit 16 preferably acquires probability information using $(1/Z_i)$ exp(product of the vector acquired by the vector acquiring unit 15 and the weight vector). Note that $Z_i$ is a normalization factor.

In the probability information acquiring unit 16, a probability calculating formula, which is a formula for calculating a probability that a next word position candidate is a next word position, is stored in advance. The probability information acquiring unit 16 reads the probability calculating formula, and substitutes the source information for the probability calculating formula, thereby executing the probability calculating formula. The probability information acquiring unit 16 acquires, for each next word position candidate, probability information. The probability calculating formula has, for example, a product of the vector acquired by the vector acquiring unit 15 and the weight vector (it may be a transposed vector of the weight vector). More specifically, the probability calculating formula is, for example, Equation 2 or 3 below. The model shown by Equation 2 is the Pair model, and the model shown by Equation 3 is the Sequence model.

$$p(j = g \mid i, s_0^{n+1}) = \frac{1}{Z_i} \exp(w^T f(s_{i-2}^{i+2}, s_{j-2}^{j+2}, o, d))$$

$$o = \begin{cases} 0(i < j) \\ 1(i > j) \end{cases}, \quad d = \begin{cases} 0(\lvert j - i \rvert = 1) \\ 1(2 \leq \lvert j - i \rvert \leq 5), \\ 2(6 \leq \lvert j - i \rvert) \end{cases}$$

$$\text{Equation 2}$$

In Equation 2 showing the Pair model, a current word position (it also may be referred to as a CP) is taken as i, a next word position candidate (it also may be referred to as an NP candidate) is taken as j, and an input sentence (source language sentence) is taken as $S = s_0 \ldots s_{n+1} = s_0^{n+1}$ (where $s_0$ = BOS (beginning-of-sentence marker) and $s_{n+1}$ = EOS (end-of-sentence marker)). In Equation 2, w is a weight vector, an element of f is a binary feature function, and $Z_i$ is a normalization factor. This model is trained using a translation corpus and word alignment, and is used to calculate an NP probability during translation. The weight vector w is learned using training data and a maximum entropy method. The probability is calculated while simultaneously considering a word at a CP and its surrounding words $(s_{i-2}^{i+2})$ and a word at an NP candidate and its surrounding words $(s_{j-2}^{j+2})$. Note that the surrounding words $(s_{i-2}^{i+2})$ of the CP are the above-described current word-surrounding words, and the surrounding words $(s_{j-2}^{j+2})$ of the NP candidate are the above-described next word-surrounding words.

Furthermore, the first term in exp() is a combination of a CP and another position in the label sequence. The second term is a combination of an NP candidate and another position in the label sequence. In Equation 2, o is word order information. If the current word is before the next word candidate, the word order information is "0", and, if the current word is after the next word candidate, the word order information is "1". In Equation 2, d is distance information. In Equation 2, the distance information may have one of three values. That is to say, in Equation 2, the distance between the current word and the next word candidate in the source language sentence is classified into one of three values. If the distance between the current word and the next word candidate is 1, the distance information is "0", if the distance is 2 or more and 5 or less, the distance information is "1", and, if the distance is 6 or more, the distance information is "2". Note that, as the distance information, using two or more classes obtained by classifying the distance is more preferable than using the distance as it is.

$$P(j = g \mid i, s_0^{n+1}) =$$

$$\frac{1}{Z_i} \exp\left( \sum_{k \in M \cup \{j\}} w^T f(s_{i-2}^{i+2}, s_{k-2}^{k+2}, l_i, l_k, o, d) \right.$$

$$\left. + \sum_{k \in M \cup \{i\}} w^T f(s_{k-2}^{k+2}, s_{j-2}^{j+2}, l_k, l_j, o, d) \right)$$

$$M = \begin{Bmatrix} m \mid i < m < j \\ m \mid j < m < i \end{Bmatrix} \begin{pmatrix} i < j \\ i > j \end{pmatrix}$$

Equation 3

In Equation 3 showing the Sequence model, $Z_i$ is a normalization factor. The first term in exp() is a combination of a CP and another position in the label sequence. The second term is a combination of an NP candidate and another position in the label sequence.

Furthermore, in Equation 3, li is a label that a word i (word at a CP) may be provided with, $l_j$ is a label that a word j (word at an NP candidate) may be provided with, and $l_k$ is a label that a word k may be provided with.

Furthermore, the Sequence model can not only "simultaneously consider a CP and current word-surrounding words (surrounding words ($s_{i-2}^{i+2}$) of the CP) and an NP candidate and next word-surrounding words (surrounding words ($s_{j-2}^{j+2}$) of the NP candidate)", which is possible also in the Pair model, but also learn "a relative word order between NP candidates" and "a difference in distance" from training data (i.e., set each weight vector to an appropriate value) and take them into consideration when calculating an NP candidate probability.

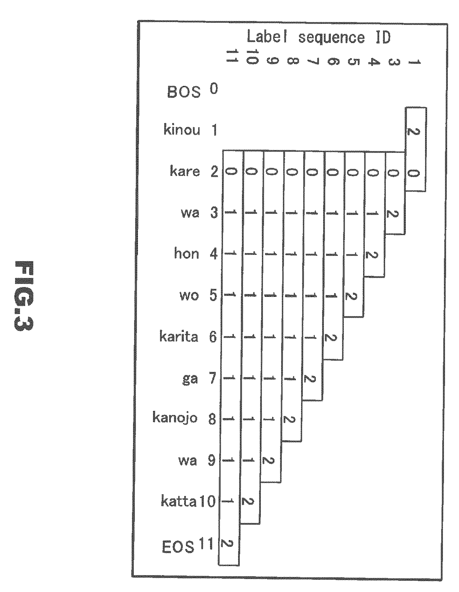

It is possible to consider a relative word order because of the following reason. The label sequence makes it possible to consider a relative word order. For example, in FIG. 3, if the label sequence ID is 10, it can be considered that *"karita"* is on the left side of *"katta"*. The reason for this is that *"katta"* is provided with a label 2, and *"karita"* is provided with a label 1. The label 1 is defined to be relatively closer to the CP than the label 2 is.

It is possible to consider a difference in distance because of the following reason. If a model is designed such that label sequences with different lengths are distinguished from each other, the model can handle the influence of the distance. Since the number of labels between a CP and an NP candidate contained in a long label sequence is large, the number of features extracted from the long label sequence is large. On the other hand, since the number of labels between a CP and an NP candidate contained in a short label sequence is small, the number of features extracted from the short label sequence is small. The bias from these differences provides important clues for learning the effect of the distance.

The output unit 17 outputs the probability information acquired by the probability information acquiring unit 16. The output is typically delivery of a processing result to another processing apparatus or another program, or the like. Herein, another program is, for example, a program contained in software of machine translation. Note that the output is a concept that encompasses display on a display screen, projection using a projector, printing in a printer, output of a sound, transmission to an external apparatus, accumulation in a storage medium, and the like.

The sentence storage unit 11 and the weight vector storage unit 12 are preferably realized by a non-volatile storage medium, but may be realized also by a volatile storage medium. There is no limitation on the procedure in which the source language sentence and the like are stored in the sentence storage unit 11 and the like. For example, the source language sentence and the like may be stored in the sentence storage unit 11 and the like via a storage medium, the source language sentence and the like transmitted via a communication line or the like may be stored in the sentence storage unit 11 and the like, or the source language sentence and the like input via an input device may be stored in the sentence storage unit 11 and the like.

The candidate acquiring unit 14, the vector acquiring unit 15, the source information acquiring part 151, the vector acquiring part 152, and the probability information acquiring unit 16 may be realized typically by an MPU, a memory, or the like. Typically, the processing procedure of the candidate acquiring unit 14 and the like is realized by software, and the software is stored in a storage medium such as a ROM. Note that the processing procedure of the candidate acquiring unit 14 and the like may be realized also by hardware (a dedicated circuit).

The output unit 17 may be realized typically by an MPU, a memory, or the like. The output unit 17 may be considered to include or not to include an output device such as a display screen or a loudspeaker. The output unit 17 may be realized, for example, by driver software for an output device, a combination of driver software for an output device and the output device, or the like.

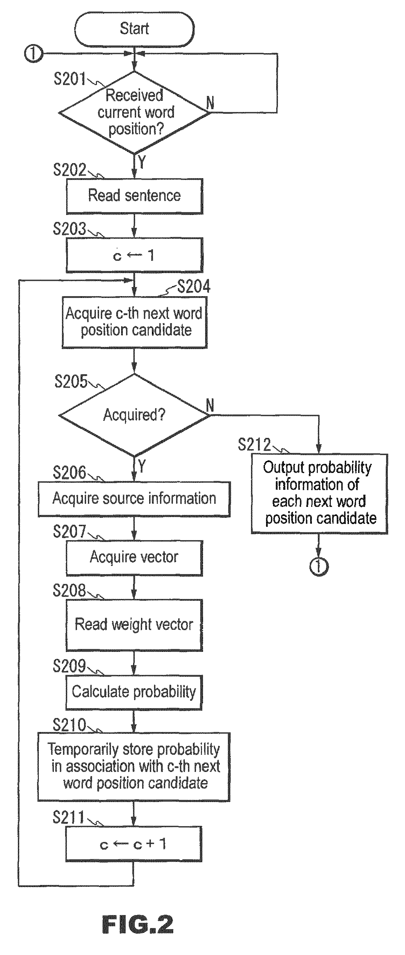

Next, an operation of the translation word order information output apparatus 1 will be described with reference to the flowchart in FIG. 2.

(Step S201) The receiving unit 13 judges whether or not the current word position has been received. If the current word position has been received, the procedure advances to step S202, and, if not, the procedure returns to step S201.

(Step S202) The candidate acquiring unit 14 reads a sentence from the sentence storage unit 11. This sentence is a source language sentence that is to be translated. The current word received in step S201 is contained in this source language sentence.

(Step S203) The candidate acquiring unit 14 substitutes 1 for a counter c.

(Step S204) The candidate acquiring unit 14 acquires a c-th next word position candidate.

(Step S205) The vector acquiring unit 15 judges whether or not the c-th next word position candidate has been acquired in step S204. If the c-th next word position candidate has been acquired, the procedure advances to step S206, and, if not, the procedure advances to step S212.

(Step S206) The source information acquiring part 151 of the vector acquiring unit 15 acquires source information. That is to say, the source information acquiring part 151 acquires, for example, one or more current word-surrounding words. The current word-surrounding words are, for example, four words consisting of a word immediately before the current word, a word 2 words before the current word, a word immediately after the current word, and a word 2 words after the current word. It is assumed that these current word-surrounding words can be expressed as $(s_{i-2}^{i+2})$. Furthermore, the source information acquiring part 151 acquires, for example, one or more next word-surrounding words. The next word-surrounding words are, for example, four words consisting of a word immediately before the next word candidate, a word 2 words before the next word candidate, a word immediately after the next word candidate, and a word 2 words after the next word candidate. It is assumed that these next word-surrounding words can be expressed as $(s_{j-2}^{j+2})$. Furthermore, the source information acquiring part 151 acquires word order information, which is information regarding a relative word order between the current word and the next word candidate in the source language sentence. The word order information is, for example, 0 or 1. If the current word is before the next word candidate, the word order information is "0", and, if the current word is after the next word candidate, the word order information is "1". Furthermore, the source information acquiring part 151 acquires distance information, which is information regarding a distance between the current word and the next word candidate in the source language sentence. Moreover, the source information acquiring part 151 acquires, for example, one or more words between the current word and the next word candidate. The source information is composed of the information acquired by the source information acquiring part 151, the current word, and the next word candidate.

(Step S207) The vector acquiring part 152 acquires a vector using the source information acquired in step S206. For example, the vector acquiring part 152 substitutes information forming two or more pieces of source information respectively for two or more feature functions, thereby acquiring a vector having two or more elements. The feature functions are preferably binary feature functions. In the vector acquiring part 152, two or more feature functions are stored in advance.

(Step S208) The probability information acquiring unit 16 reads the weight vector (w) from the weight vector storage unit 12.

(Step S209) The probability information acquiring unit 16 acquires probability information indicating a probability that the c-th next word position candidate is the next word position, using the vector acquired in step S207 and the weight vector read in step S208.

(Step S210) The probability information acquiring unit 16 temporarily stores the probability information acquired in step S209, in an unshown buffer, in association with the c-th next word position candidate.

(Step S211) The candidate acquiring unit 14 increments the counter c by 1, and the procedure returns to step S204.

(Step S212) The output unit 17 outputs the probability information of each next word position candidate stored in the unshown buffer, and the procedure returns to step S201.

Note that the procedure is terminated by powering off or an interruption at completion of the process in the flowchart in FIG. 2.

Hereinafter, a specific operation of the translation word order information output apparatus 1 in this embodiment will be described. Below, the case will be described in which the probability information of each next word candidate is output using the Sequence model. It is assumed that the translation word order information output apparatus 1 is an apparatus for use in Japanese-English translation.

It is assumed that, in the sentence storage unit 11, a source language sentence "*kinou kare wa hon wo karita ga kanojo wa katta*" is stored.

Furthermore, in the vector acquiring unit 15, Equations 4 and 5 below for calculating a vector are stored.

$$f\left(s_{i-2}^{i+2}, s_{k-2}^{k+2}, l_i, l_k, o, d\right)$$

<div align="right">Equation 4</div>

$$f\left(s_{k-2}^{k+2}, s_{j-2}^{j+2}, l_k, l_j, o, d\right)$$

<div align="right">Equation 5</div>

In the probability information acquiring unit 16, Equation 3 is stored.

In this situation, the Sequence model will be described. In the Sequence model, a label sequence (see FIG. 3) will be described in which a CP is taken as 0, a position between the CP and an NP candidate is taken as 1, and the NP candidate is taken as 2. The translation word order information output apparatus 1 learns the model so as to identify the label sequence in FIG. 3, and calculates the probability using this model.

It is assumed that the receiving unit 13 has received the position "2" of "*kare*" as the current word position (CP). An operation of the translation word order information output apparatus 1 will be described in the case where the NP candidate is the position "10" of "*katta*". That is to say, it is assumed that the candidate acquiring unit 14 has acquired "10" that is a ninth next word position candidate (position of "*katta*").

Next, the source information acquiring part 151 of the vector acquiring unit 15 acquires current word-surrounding words $s_{i-2}$ = "BOS", $s_{i-1}$ = "*kinou*", $s_{i+1}$ = "*was*", and $s_{i+2}$ = "*hon*". Note that, for example, it is not sufficient to merely see words that are aligned around the current word, but it is also necessary to see their relative positions (information such as $s_{i-1}$). Furthermore, the source information acquiring part 151 acquires next word-surrounding words $s_{j-2}$ = "*kanojo*", $s_{j-1}$ = "*wa*", $s_{j+1}$ = "EOS", and $s_{j+2}$ = "NULL". Furthermore, the source information acquiring part 151 acquires word order information "o = 0" (indicating that the current word is before the next word candidate). Furthermore, the source information acquiring part 151 acquires distance information "d = 2" (indicating that the distance between the current word and the next word candidate is 6 or more). Moreover, the source information acquiring part 151 acquires the current word "*kare*" and the next word candidate "*katta*".

Next, the vector acquiring part 152 substitutes the acquired information forming the source information for Equations 4 and 5 (the corresponding feature functions), thereby acquiring a vector f.

Next, the probability information acquiring unit 16 reads the weight vector (w) from the weight vector storage unit 12.

Subsequently, the probability information acquiring unit 16 substitutes the acquired vector and the read weight vector for Equation 3, thereby acquiring probability information indicating a probability that the next word position candidate (position "10" of "*katta*") is the next word position.

The above-described processing is performed on all next word position candidates. The output unit 17 outputs the probability information of each next word position candidate.

In FIG. 3, values of NP candidates are used as label sequence IDs. Accordingly, calculating an NP candidate probability is the same as identifying a label sequence.

With the label sequences in FIG. 3, it is possible to consider a relative word order. For example, in the label sequence in which the label sequence ID in FIG. 3 is 10, it can be considered that "*karita*" is on the left side of "*katta*". The reason for this is that "*katta*" is provided with a label 2, and "*karita*" is provided with a label 1. The label 1 is defined to be relatively closer to the CP than the label 2 is. Note that "*karita*" is an example of the above-described intermediate word.

Furthermore, since the length of a label sequence in which an NP candidate is far from a CP is long, the influence of the differences in lengths of label sequences can be used to learn the model. This aspect is useful to learn the influence of the differences in distances.

As described above, with this embodiment, in a state where a word that is currently being translated in a source language sentence is known, a word that is to be translated next can be accurately determined.

Note that, in this embodiment, the translation word order information output apparatus 1 is effective especially in statistical translation.

The processing in this embodiment may be realized using software. The software may be distributed by software download or the like. Furthermore, the software may be distributed in a form where the software is stored in a storage medium such as a CD-ROM. Note that the same is applied to other embodiments described in this specification. The software that realizes the translation word order information output apparatus 1 in this embodiment may be the following sort of program. Specifically, this program is a program for causing a computer-accessible storage medium to have a sentence storage unit in which a source language sentence, which is a sentence in a source language that is to be translated, can be stored, and a weight vector storage unit in which a weight vector indicating a weight of each element of a vector can be stored, and causing a computer to function as: a receiving unit that receives a current word position, which is one word position in the source language sentence and is a position of a word that is currently being translated; a candidate acquiring unit that acquires the current word position and one or more next word position candidates, each of which is a position of a word that is a candidate for a word that is to be translated following the current word, from the source language sentence; a vector acquiring unit that acquires a vector having two or more elements, using a current word indicated by the current word position, a next word candidate indicated by each of the next word position candidates, and the source language sentence; a probability information acquiring unit that acquires, for each of the one or more next word position candidates acquired by the candidate acquiring unit, probability information regarding a probability that a word at that next word position candidate is a next word that is to be translated following the current word, using the vector acquired by the vector acquiring unit and the weight vector; and an output unit that outputs the probability information acquired by the probability information acquiring unit.

It is preferable that the program causes the computer to operate such that the vector acquiring unit includes: a source information acquiring part that acquires source information having the current word, one or more current word-surrounding words including a word immediately before the current word or a word immediately after the current word, the next word candidate, one or more next word-surrounding words including a word immediately before the next word candidate or a word immediately after the next word candidate, word order information, which is information regarding a relative word order between the current word and the next word candidate in the source language sentence, and distance information, which is information regarding a distance between the current word and the next word candidate in the source language sentence; and a vector acquiring part that acquires a vector having two or more elements, using the source information acquired by the source information acquiring part.

It is preferable that the program causes the computer to operate such that the vector acquiring unit acquires a vector having two or more elements, using one or more intermediate words as well, each of which is a word in the source language sentence and is a word between the current word and the next word candidate.

It is preferable that the program causes the computer to operate such that the vector acquiring unit includes: a source information acquiring part that acquires source information having the current word, one or more current word-surrounding words including a word immediately before the current word or a word immediately after the current word, the next word candidate, one or more next word-surrounding words including a word immediately before the next word candidate or a word immediately after the next word candidate, word order information, which is information regarding a relative word order between the current word and the next word candidate in the source language sentence, distance information, which is information regarding a distance between the current word and the next word candidate in the source language sentence, and one or more words between the current word and the next word candidate; and a vector acquiring part that acquires a vector having two or more elements, using the source information acquired by the source information acquiring part.

Embodiment 2

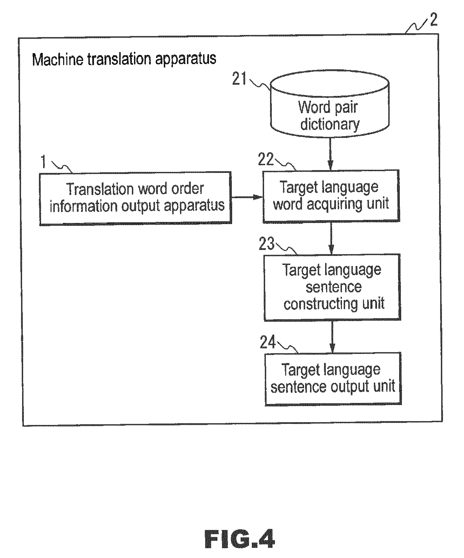

FIG. 4 shows a block diagram of a machine translation apparatus 2 using output results of the translation word order information output apparatus 1 of the present invention described in detail with reference to FIGS. 1 to 3. The machine translation apparatus 2 includes a word pair dictionary 21, the translation word order information output apparatus 1, a target language word acquiring unit 22, a target language sentence constructing unit 23, and a target language sentence output unit 24, and is typically a statistical machine translation apparatus.

In the word pair dictionary 21, two or more word pairs can be stored. The word pairs are pairs of a word in a source language and a word in a target language.

The target language word acquiring unit 22 determines a next word from the probability information of the one or more next word candidates output by the translation word order information output apparatus 1, and acquires a word in the target language corresponding to the next word from the word pair dictionary 21.

The target language sentence constructing unit 23 constructs a target language sentence from one or more words in the target language acquired by the target language word acquiring unit 22.

The target language sentence output unit 24 outputs the target language sentence constructed by the target language sentence constructing unit 23. The output is a concept that encompasses display on a display screen, projection using a projector, printing in a printer, output of a sound, transmission to an external apparatus, accumulation in a storage medium, delivery of a processing result to another processing apparatus or another program, and the like.

The word pair dictionary 21 is preferably realized by a non-volatile storage medium, but may be realized also by a volatile storage medium. There is no limitation on the procedure in which the word pair is stored in the word pair dictionary 21. For example, the word pair may be stored in the word pair dictionary 21 via a storage medium, the word pair transmitted via a communication line or the like may be stored in the word pair dictionary 21, or the word pair input via an input device may be stored in the word pair dictionary 21.

The target language word acquiring unit 22 and the target language sentence constructing unit 23 may be realized typically by an MPU, a memory, or the like. Typically, the processing procedure of the target language word acquiring unit 22 and the like is realized by software, and the software is stored in a storage medium such as a ROM. Note that the processing procedure may be realized also by hardware (a dedicated circuit).

The target language sentence output unit 24 may be considered to include or not to include an output device such as a display screen or a loudspeaker. The target language sentence output unit 24 may be realized, for example, by driver software for an output device, a combination of driver software for an output device and the output device, or the like.

The operation of the machine translation apparatus 2 that performs machine translation while determining the word order of words that are to be translated is a known art, and, thus, a detailed description thereof has been omitted.

As described above, with this embodiment, in a state where a word that is currently being translated in a source language sentence is known, a word that is to be translated next can be accurately determined. As a result, precise machine translation can be performed.

The software that realizes the machine translation apparatus 2 in this embodiment may be the following sort of program. Specifically, this program is a program for causing a computer-accessible storage medium to have a word pair dictionary in which two or more word pairs, each of which is a pair of a word in a source language and a word in a target language, can be stored, and causing a computer to function as: the translation word order information output apparatus 1; a target language word acquiring unit that determines a next word from the probability information of the one or more next word candidates output by the translation word order information output apparatus, and acquires a word in the target language corresponding to the next word from the word pair dictionary; a target language sentence constructing unit that constructs a target language sentence from one or more words in the target language acquired by the target language word acquiring unit; and a target language sentence output unit that outputs the target language sentence constructed by the target language sentence constructing unit.

Embodiment 3

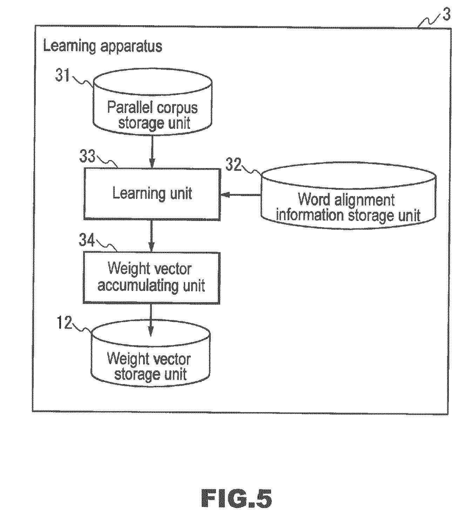

FIG. 5 shows a learning apparatus that learns a weight vector for use in the translation word order information output apparatus 1 or the machine translation apparatus 2. A learning apparatus 3 includes the weight vector storage unit 12, a parallel corpus storage unit 31, a word alignment information storage unit 32, a learning unit 33, and a weight vector accumulating unit 34.

In the parallel corpus storage unit 31, a parallel corpus is stored. The parallel corpus is composed of a large number of pairs of original and translated sentences consisting of pairs of a source language sentence and a target language sentence. The source language sentence is a sentence in a source language that is to be translated. The target language sentence is a sentence obtained by correctly translating the corresponding source language sentence, into a target language.

In the word alignment information storage unit 32, word alignment information is stored. The word alignment information is information indicating a correspondence between a word forming a source language sentence and a word forming a target language sentence. The word forming a target language sentence is a word in a target language, and is a result obtained by translating a word forming a source language sentence, into a target language.

The learning unit 33 acquires a weight vector, using the original and translated sentences stored in the parallel corpus storage unit 31 and the word alignment information stored in the word alignment information storage unit 32.

Specifically, the learning unit 33 acquires a current word position indicating a position of a current word and a next word position indicating a position of a next word of each target language sentence while moving the current word of that target language sentence from left to right, in each of two or more target language sentences contained in the two or more pairs of original and translated sentences stored in the parallel corpus storage unit 31. Next, the learning unit 33 acquires a current word position, a next word position, and all next word position candidates in a source language sentence corresponding to a current word position and a next word position in each target language sentence, using the word alignment information. The current word position is information indicating a position of a current word, the next word position is information indicating a position of a next word, and next word position candidates are information indicating all positions of next word candidates other than the next word position. Next, the learning unit 33 acquires a feature regarding a current word position, a next word position, and all next word position candidates in each source language sentence. Note that "moving the current word" refers to an operation that moves a pointer indicating the current word, or the like.

The feature acquired by the learning unit 33 is, for example, $<o><s_p><s_q>$. Note that p may be i-2 to i+2, and q may be j-2 to j+2. It is assumed that p = i and q = j. Furthermore, $<o>$ is the word order information, and, is, for example, "0" if "i < j". It is assumed that "$s_i$" = "*kare*" and "$s_j$" = "*katta*". Furthermore, $<s_p>$ is five words in total consisting of a CP, two words immediately before the CP, and two words immediately after the CP. Furthermore, $<s_q>$ is five words in total consisting of an NP candidate, two words immediately before the NP candidate, and two words immediately after the NP candidate. Note that, as well as $<s_p><s_q>$, information indicating positions of the words is also contained. The acquired feature may be, for example, $<s_{i-2}>$, $<s_{i-1}>$, $<s_i>$, $<s_{i+1}>$, $<s_{i+2}>$, $<t_i>$, $<t_{i-1},t_i>$, $<t_i,t_{i+1}>$, $<s_i,t_i>$, or the like. Note that $<s_i>$ is a current word, $<s_{i-2}>$ is a word 2 words before the current word, $<s_{i-1}>$ is a word immediately before the current word, $<s_{i+1}>$ is a word immediately after the current word, $<s_{i+2}>$ is a word 2 words after the current word, $<t_i>$ is the part of speech of the current word, $<t_{i-1}>$ is the part of speech of the word immediately before the current word, $<t_{i+1}>$ is the part of speech of the word immediately after the current word, $<t_{i-1},t_i>$ is the part of speech of the word immediately before the current word and the part of speech of the current word, and $<t_i,t_{i+1}>$ is the part of speech of the current word and the part of speech of the word immediately after the current word. Moreover, the acquired feature may be, for example, $<o>$, $<o,s_p>$, $<o,t_i>$, $<o,t_j>$, $<o,d>$, $<o,s_p,s_q>$, $<o,t_i,t_j>$, $<o,t_{i-1},t_i,t_j>$, $<o,t_i,t_i+1,t_j>$, $<o,t_i,t_j-1,t_j>$, $<o,t_i,t_j,t_{j+i}>$, $<o,s_i,t_i,t_j>$, $<o,s_j,t_i,t_j>$, or the like. Note that p satisfies "$p \in \{p | i \cdot 2 <= p <= i+2 \; v \; j-2 <= p <= j+2\}$". Furthermore, (p,q) satisfies "$(p,q) \in \{(p,q) i-2 < p < i+2 \wedge j-2 < q < j+2 \wedge (|p \cdot i| <= 1 \; v \; |q-j| <= 1)\}$".

The learning unit 33 performs the above-described processing on all pairs of original and translated sentences. Next, the learning unit 33 determines a weight vector so as to maximize the entropy. This method is referred to as an LBFGS method and is a known art, and, thus, a detailed description thereof has been omitted. Regarding the LBFGS method, see the paper "D.C. Liu and J. Nocedal. 1989. On the limited memory method for large scale optimization. Mathematical Programming B, 45(3): 503-528." The learning unit 33 preferably uses a Gaussian prior for smoothing the weight vector. The Gaussian prior is described in the paper "Stanley F. Chen and Ronald Rosenfeld. 1999. A Gaussian prior for smoothing maximum entropy models. Technical report.", and, thus, a detailed description thereof has been omitted.

The weight vector accumulating unit 34 accumulates the weight vector acquired by the learning processing by the learning unit 33, in the weight vector storage unit 12.

The parallel corpus storage unit 31 and the word alignment information storage unit 32 are preferably realized by a non-volatile storage medium, but may be realized also by a volatile storage medium. There is no limitation on the procedure in which the parallel corpus and the like are stored in the parallel corpus storage unit 31 and the like. For example, the parallel corpus and the like may be stored in the parallel corpus storage unit 31 and the like via a storage medium, the parallel corpus and the like transmitted via a communication line or the like may be stored in the parallel corpus storage unit 31 and the like, or the parallel corpus and the like input via an input device may be stored in the parallel corpus storage unit 31 and the like.

The learning unit 33 and the weight vector accumulating unit 34 may be realized typically by an MPU, a memory, or the like. Typically, the processing procedure of the learning unit 33 and the like is realized by software, and the software is stored in a storage medium such as a ROM. Note that the processing procedure may be realized also by hardware (a dedicated circuit).

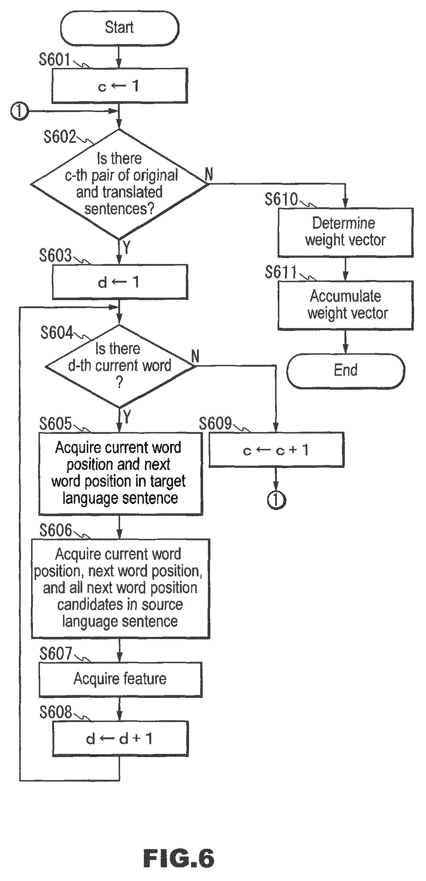

Next, an operation of the learning apparatus 3 will be described with reference to the flowchart in FIG. 6.

(Step S601) The learning unit 33 substitutes 1 for a counter c.

(Step S602) The learning unit 33 judges whether or not there is a c-th pair of original and translated sentences in the parallel corpus storage unit 31. If there is the c-th pair of original and translated sentences, the procedure advances to step S603, and, if not, the procedure advances to step S610.

(Step S603) The learning unit 33 substitutes 1 for a counter d.

(Step S604) The learning unit 33 judges whether or not there is a d-th current word in the target language sentence in the c-th pair of original and translated sentences. If there is the d-th current word, the procedure advances to step S605, and, if not, the procedure advances to step S609.

(Step S605) The learning unit 33 acquires a current word position indicating a position of the d-th current word and a next word position indicating a position of a next word from the target language sentence in the c-th pair of original and translated sentences.

(Step S606) The learning unit 33 acquires a current word position indicating a position of a current word, a next word position indicating a position of a next word, and all next word position candidates other than the next word position in the source language sentence corresponding to the d-th current word position and the next word position, using the word alignment information.

(Step S607) The learning unit 33 acquires one or at least two features, using the current word position, the next word position, and all next word position candidates acquired in step S606. The learning unit 33 temporarily stores the acquired one or at least two features, in an unshown buffer.

(Step S608) The learning unit 33 increments the counter d by 1, and the procedure returns to step S604.

(Step S609) The learning unit 33 increments the counter c by 1, and the procedure returns to step S602.

(Step S610) The learning unit 33 determines a weight vector so as to maximize the entropy, using the large number of features stored in the unshown buffer. In this step, the smoothing processing of the weight vector is also performed.

(Step S611) The weight vector accumulating unit 34 accumulates the weight vector acquired by the learning unit 33 in step S611, in the weight vector storage unit 12.

As described above, with this embodiment, a weight vector for use in the translation word order information output apparatus 1 can be learned.

The processing of the learning apparatus 3 in this embodiment may be realized using software. The software may be distributed by software download or the like. Furthermore, the software may be distributed in a form where the software is stored in a storage medium such as a CD-ROM.

The software that realizes the learning apparatus 3 in this embodiment may be the following sort of program. Specifically, this program is a program for causing a computer-accessible storage medium to have a weight vector storage unit in which a weight vector indicating a weight of each element of a vector can be stored, a parallel corpus storage unit in which a parallel corpus composed of two or more pairs of original and translated sentences, each of which is a pair of a source language sentence and a target language sentence, can be stored, and a word alignment information storage unit in which word alignment information, which is information indicating a correspondence between a word forming a source language sentence and a word forming a target language sentence, can be stored, and causing a computer to function as: a learning unit that acquires a current word position, which is a position of a current word, and a next word position, which is a position of a next word, of each target language sentence while moving the current word of that target language sentence from left to right, in each of two or more target language sentences contained in the two or more pairs of original and translated sentences, acquires a current word position indicating a position of a current word, a next word position indicating a position of a next word, and all next word position candidates other than the next word position in each source language sentence corresponding to a current word position and a next word position in each target language sentence, using the word alignment information, acquires one or at least two features regarding a current word position, a next word position, and all next word position candidates in each source language sentence, and determines a weight vector so as to maximize the entropy, using the acquired features, thereby acquiring the weight vector; and a weight vector accumulating unit that accumulates the weight vector acquired by the learning unit, in the weight vector storage unit.

Experimental Results

Hereinafter, experimental results of the translation word order information output apparatus 1 and the like will be described.

(1) Settings for Experiment

In the experiment, a patent document with its source language being Japanese and target language being English was stored in the parallel corpus storage unit 31 of the learning apparatus 3. Also, a patent document with its source language being English and target language being Chinese was stored in the parallel corpus storage unit 31. The patent document used was a document of the NTCIR-9 patent machine translation task (see Isao Goto, Bin Lu, Ka Po Chow, Eiichiro Sumita, and Benjamin K. Tsou. 2011. Overview of the patent machine translation task at the NTCIR-9 workshop. In Proceedings of NTCIR-9, pages 559-578.).

As Japanese morphological analyzing software, Mecab (URL: http://mecab.sourceforge.net) was used. For segmentation and part-of-speech tagging in Chinese sentences, Stanford segmenter and tagger (URL: http://nlp.stanford.edu/software/segmenter.shtml, http://nlp.stanford.edulsoftware/tagger.shtml) were used. As training data, sentences within 40 words were selected. About 2.05 million Japanese-English pairs of original and translated sentences and about 0.49 million Chinese-English pairs of original and translated sentences were used. In order to acquire word alignments, GIZA++ and growdiag-final-and heuristics were used. In order to reduce word alignment errors, articles {a, an, the} were removed from English sentences, and particles {*ga, wo, wa*} were removed from Japanese sentences. The reason for this is that these words do not correspond to any word in the other language sentences. After the word alignment, the removed word were returned to their original positions. 5-gram language models were used. The 5-gram language models were an English sentence set of bilingual training data.

In this experiment, an in-house phrase-based SMT was used that was compatible with the Moses decoder (see the paper "Philipp Koehn, Hieu Hoang, Alexandra Birch, Chris Callison-Burch, Marcello Federico, Nicola Bertoldi, Brooke Cowan, Wade Shen, Christine Moran, Richard Zens, Chris Dyer, Ondrej Bojar, Alexandra Constantin, and Evan Herbst.

2007. Moses: Open source toolkit for statistical machine translation. In Proceedings of the 45th Ann ual Meeting of the Association for Computational Linguistics Companion Volume Proceedings of the Demo and Poster Sessions, pages 177-180, Prague, Czech Republic, June. Association for Computational Linguistics.").

Furthermore, in this experiment, each parameter of the SMT weight vector was tuned with MERT. In this experiment, in order to stabilize the MERT result, the experimenter performed tuning three times with MERT using the first half of the development data. Then, an SMT weight vector parameter set with the best BLEU score when the second half of the development data was used was selected from among the three SMT weight vector parameter sets.

Furthermore, in this experiment, the experimenter compared systems using a common SMT feature set including a standard SMT feature set and a feature set different from the standard set. The common SMT feature set includes five features as follows:

(1) the linear distortion cost model feature (LINEAR),
(2) the linear distortion cost model feature and the six MSD bidirectional lexical distortion model features (LINEAR+LEX),
(3) the outbound and inbound distortion model features discriminating nine distortion classes (9-CLASS),
(4) the feature of the Pair model, which is an example of the translation word order information output apparatus 1, (PAIR), and
(5) the feature of the Sequence model, which is an example of the translation word order information output apparatus 1, (SEQUENCE).

Furthermore, the Pair model and the Sequence model, which are examples of the translation word order information output apparatus 1, were trained as follows. That is to say, about 0.2 million pairs of original and translated sentences and their word alignment information were respectively stored in the parallel corpus storage unit 31 and the word alignment information storage unit 32. The feature used in the Sequence model was a label pair of the positions of the current word and the next word, and was <0,1>, <1,0>, or <1,2>.

Furthermore, the weight vector was determined so as to maximize the entropy, using the LBFGS method. Moreover, the Gaussian prior was used for smoothing the weight vector.

Furthermore, in the 9-CLASS, training data as in the Sequence model was used. In the 9-CLASS, $<s_{i-2}>$, $<s_{i-1}>$, $<s_i>$, $<s_{i+1}>$, $<s_{i+2}>$, $<t_{i-1}>$, $<t_i>$, $<t_{i+1}>$, $<t_{i-1},t_i>$, and $<t_i,t_{i+1}>$ were used as the features. These feature templates correspond to the feature templates in the Sequence model and the Pair model. In the Sequence model and the like, in addition to the above-described features, relative positional information in source language sentences was used as the feature. The feature was used by Green et al. (see the paper "Spence Green, Michel Galley, and Christopher D. Manning. 2010. Improved models of distortion cost for statistical machine translation. In Human Language Technologies: The 2010 Annual Conference of the North American Chapter of the Association for Computational Linguistics, pages 867-875, Los Angeles, California, June. Association for Computational Linguistics"). The positional information is classified into five values. In the inbound model, i of the feature template is changed to j. Features that appeared four or more times in the sentences for learning were used. Moreover, in order to estimate the model parameters, the maximum entropy method with Gaussian prior smoothing was used. The LINEAR+LEX model was built using all data used for building the translation model.

(2) Experimental result

Hereinafter, experimental results of the machine translation apparatus 2 using the translation word order information output apparatus 1 will be described. In the experiment, the qualities of machine translation were evaluated in the cases where the five features (LINEAR, LINEAR+LEX, 9-CLASS, PAIR, SEQUENCE) in (1) to (5) were used. In this experiment, the automatic evaluation score BLEU-4 was used to evaluate the qualities of machine translation.

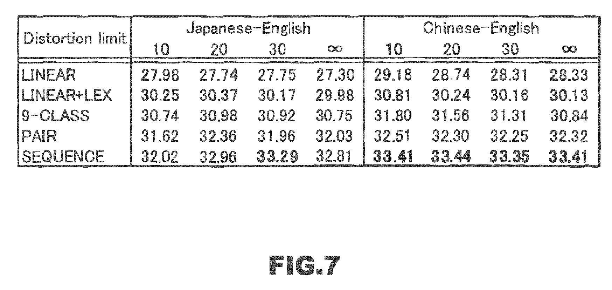

Furthermore, in this experiment, the evaluation was performed using distortion limits of 10, 20, 30, and unlimited (∞). FIG. 7 shows the evaluation results. In FIG. 7, the Sequence model, which is an example of the translation word order information output apparatus 1, outperformed the others, in both the Japanese-English translation and the Chinese-English translation.

Furthermore, the Sequence model outperformed the Pair model. This confirms the effectiveness of considering relative word orders between a CP and an NP candidate and words between a CP and an NP candidate.

Furthermore, the Pair model outperformed the 9-CLASS. This confirms the effectiveness of considering both a word at the CP and a word at the NP candidate.

Furthermore, it was seen that it is difficult to perform accurate translation with small distortion limits, in translation between languages with significantly different word orders (e.g., Japanese and English, etc.).

In the case where the Sequence model was used in Japanese-English translation, better results were obtained with a distortion limit of 20 or 30 than with a distortion limit of 10 (see FIG. 7). On the other hand, the same was not applied to LINEAR, LINEAR+LEX, or 9-CLASS (see FIG. 7). This confirms that the Sequence model can handle reordering candidates with longer distances, compared with the others.

Furthermore, in this experiment, hierarchical phrase-based SMT (Hier) using the Moses implementation was tested. In this test, unlimited max-chart-span was used for system settings. As a result, in the Hier, the BLEU-4 value was "30.47" in Japanese-English translation, and was "32.66" in Chinese-English translation. These values were lower than those in the Sequence model. The difference therebetween in Japanese-English translation was significant, whereas that in Chinese-English translation was small.

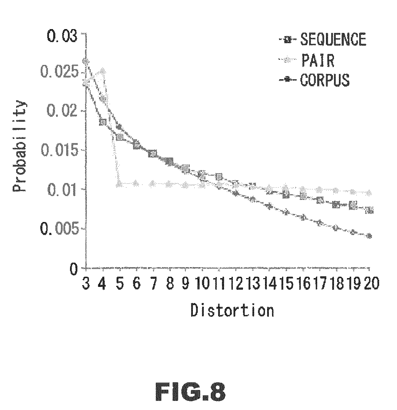

Moreover, in this experiment, probabilities (average distortion probabilities) were calculated, which were results obtained by applying distortions of 3 to 20 to three types of models (SEQUENCE, PAIR, and CORPUS) in Japanese-English translation. FIG. 8 is a graph showing the experimental results. CORPUS is the probability of the actual distortions in the training data obtained from the word alignment information used to build the translation model. The distortion probability of the CORPUS was obtained by dividing the number of distortions by the total number of distortions in the training data. The distances in the same class were used in the three types of models.

FIG. 8 shows that the PAIR generated average distortion probabilities that were almost the same. On the other hand, the average distortion probabilities for the SEQUENCE decreased according to an increase in the lengths of the distortions. Note that the distance class was the same even if the lengths of the distortions were different. The same was applied to the CORPUS (see FIG. 8). Accordingly, it is seen that the SEQUENCE in the translation word order information output apparatus 1 can learn the influence of distances as appropriate from the training data.

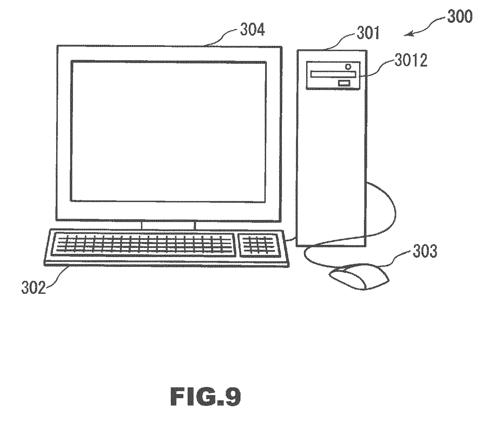

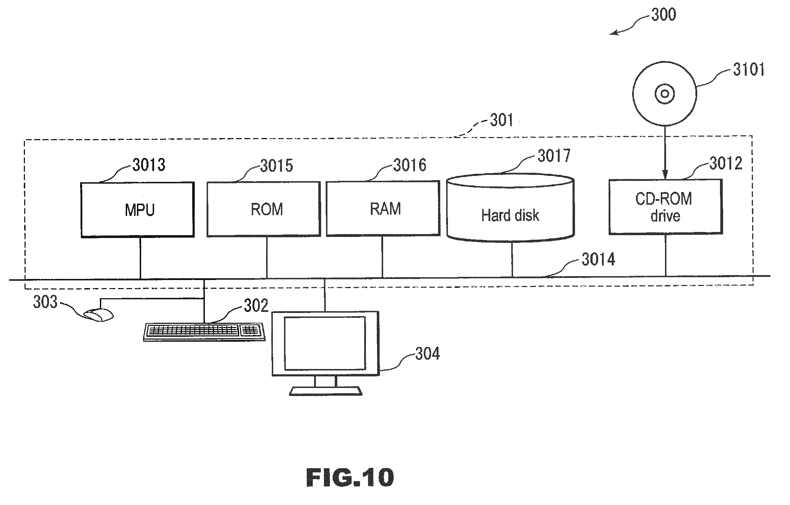

FIG. 9 shows the external appearance of a computer that executes the programs described in this specification to realize the translation word order information output apparatus and the like in the foregoing various embodiments. The foregoing embodiments may be realized using computer hardware and a computer program executed thereon. FIG. 9 is a schematic view of a computer system 300. FIG. 10 is a block diagram of the computer system 300.

In FIG. 9, the computer system 300 includes a computer 301 including a CD-ROM drive 3012, a keyboard 302, a mouse 303, and a monitor 304.

In FIG. 10, the computer 301 includes not only the CD-ROM drive 3012, but also an MPU 3013, a bus 3014, a ROM 3015, a RAM 3016, and a hard disk 3017. The bus 3014 is connected to the MPU 3013 and the CD-ROM drive 3012. In the ROM 3015, a program such as a boot up program is stored. The RAM 3016 is connected to the MPU 3013, and is a memory in which a command of an application program is temporarily stored and a temporary storage area is to be provided. In the hard disk 3017, an application program, a system program, and data are to be stored. Although not shown, the computer 301 may further include a network card that provides connection to a LAN.

The program for causing the computer system 300 to execute the functions of the translation word order information output apparatus and the like in the foregoing embodiments may be stored in a CD-ROM 3101 that is inserted into the CD-ROM drive 3012, and be transmitted to the hard disk 3017. Alternatively, the program may be transmitted via a network (not shown) to the computer 301 and stored in the hard disk 3017. At the time of execution, the program is loaded into the RAM 3016. The program may be loaded from the CD-ROM 3101, or directly from an unshown network.

The program does not necessarily have to include, for example, an operating system or a third party program to cause the computer 301 to execute the functions of the translation word order information output apparatus and the like in the foregoing embodiments. The program may only include a command portion to call an appropriate function (module) in a controlled mode and obtain the desired results. The manner in which the computer system 300 operates is well known, and, thus, a detailed description thereof has been omitted.

Furthermore, the computer that executes this program may be a single computer, or may be multiple computers. That is to say, centralized processing may be performed, or distributed processing may be performed.

Furthermore, in the foregoing embodiments, each processing (each function) may be realized as centralized processing using a single apparatus (system), or may be realized as distributed processing using multiple apparatuses.

It will be appreciated that the present invention is not limited to the embodiments set forth herein, and various modifications are possible within the scope of the present invention.

Industrial Applicability

As described above, in statistical translation, the translation word order information output apparatus according to the present invention has an effect that, in a state where a word that is currently being translated in a source language sentence is known, a word that is to be translated next can be accurately determined, and, thus, this apparatus is useful as a statistical translation apparatus and the like.

List of Reference Numerals

| 1 | Translation word order information output apparatus |
|---|---|
| 2 | Machine translation apparatus |
| 3 | Learning apparatus |
| 11 | Sentence storage unit |
| 12 | Weight vector storage unit |
| 13 | Receiving unit |
| 14 | Candidate acquiring unit |
| 15 | Vector acquiring unit |
| 16 | Probability information acquiring unit |
| 17 | Output unit |
| 21 | Word pair dictionary |
| 22 | Target language word acquiring unit |
| 23 | Target language sentence constructing unit |
| 24 | Target language sentence output unit |
| 31 | Parallel corpus storage unit |
| 32 | Word alignment information storage unit |
| 33 | Learning unit |
| 34 | Weight vector accumulating unit |
| 151 | Source information acquiring part |
| 152 | Vector acquiring part |

**Claims**

1. A translation word order information output apparatus, comprising:

a sentence storage unit in which a source language sentence, which is a sentence in a source language that is to be translated, is stored;
a weight vector storage unit in which a weight vector indicating a weight of each element of a vector is stored;
a receiving unit that receives a current word position, which is one word position in the source language sentence and is a position of a word that is currently being translated;
a candidate acquiring unit that acquires the current word position and one or more next word position candidates, each of which is a position of a word that is a candidate for a word that is to be translated following the current word, from the source language sentence;
a vector acquiring unit that acquires a vector having two or more elements, discriminatively using a current word indicated by the current word position, a next word candidate indicated by each of the next word position candidates, and one or more intermediate words, each of which is a word between the current word and the next word candidate;
a probability information acquiring unit that acquires, for each of the one or more next word position candidates acquired by the candidate acquiring unit, probability information regarding a probability that a word at that next word position candidate is a next word that is to be translated following the current word, using the vector acquired by the vector acquiring unit and the weight vector; and
an output unit that outputs the probability information acquired by the probability information acquiring unit.

2. The translation word order information output apparatus according to claim 1, wherein the vector acquiring unit includes:

a source information acquiring part that acquires source information having the current word, one or more current word-surrounding words including a word immediately before the current word or a word immediately after the current word, the next word candidate, one or more next word-surrounding words including a word immediately before the next word candidate or a word immediately after the next word candidate, word order information, which is information regarding a relative word order between the current word and the next word candidate in the source language sentence, distance information, which is information regarding a distance between the current word and the next word candidate in the source language sentence, and one or more intermediate words, each of which is a word between the current word and the next word candidate; and
a vector acquiring part that acquires a vector having two or more elements, using the source information acquired by the source information acquiring part.

**3.** The translation word order information output apparatus according to claim 1, wherein the vector acquiring unit includes:

a source information acquiring part that acquires source information having the current word, one or more current word-surrounding words including a word immediately before the current word or a word immediately after the current word, the next word candidate, one or more next word-surrounding words including a word immediately before the next word candidate or a word immediately after the next word candidate, word order information, which is information regarding a relative word order between the current word and the next word candidate in the source language sentence, and distance information, which is information regarding a distance between the current word and the next word candidate in the source language sentence; and

a vector acquiring part that acquires a vector having two or more elements, using the source information acquired by the source information acquiring part.

**4.** A machine translation apparatus, comprising:

a word pair dictionary in which two or more word pairs, each of which is a pair of a word in a source language and a word in a target language, are stored;

the translation word order information output apparatus according to claim 1;

a target language word acquiring unit that determines a next word from the probability information of the one or more next word candidates output by the translation word order information output apparatus, and acquires a word in the target language corresponding to the next word from the word pair dictionary;

a target language sentence constructing unit that constructs a target language sentence from one or more words in the target language acquired by the target language word acquiring unit; and

a target language sentence output unit that outputs the target language sentence constructed by the target language sentence constructing unit.

**5.** A machine translation apparatus, comprising:

a word pair dictionary in which two or more word pairs, each of which is a pair of a word in a source language and a word in a target language, are stored;

the translation word order information output apparatus according to claim 2;

a target language word acquiring unit that determines a next word from the probability information of the one or more next word candidates output by the translation word order information output apparatus, and acquires a word in the target language corresponding to the next word from the word pair dictionary;

a target language sentence constructing unit that constructs a target language sentence from one or more words in the target language acquired by the target language word acquiring unit; and

a target language sentence output unit that outputs the target language sentence constructed by the target language sentence constructing unit.

**6.** A machine translation apparatus, comprising:

a word pair dictionary in which two or more word pairs, each of which is a pair of a word in a source language and a word in a target language, are stored;

the translation word order information output apparatus according to claim 3;

a target language word acquiring unit that determines a next word from the probability information of the one or more next word candidates output by the translation word order information output apparatus, and acquires a word in the target language corresponding to the next word from the word pair dictionary;

a target language sentence constructing unit that constructs a target language sentence from one or more words in the target language acquired by the target language word acquiring unit; and

a target language sentence output unit that outputs the target language sentence constructed by the target language sentence constructing unit.

**7.** A learning apparatus, comprising:

a weight vector storage unit in which a weight vector indicating a weight of each element of a vector is stored;

a parallel corpus storage unit in which a parallel corpus composed of two or more pairs of original and translated sentences, each of which is a pair of a source language sentence and a target language sentence, is stored;

a word alignment information storage unit in which word alignment information, which is information indicating a correspondence between a word forming a source language sentence and a word forming a target language sentence, is stored;

a learning unit that acquires a current word position, which is a position of a current word, and a next word position, which is a position of a next word, of each target language sentence while moving the current word of that target language sentence from left to right, in each of two or more target language sentences contained in the two or more pairs of original and translated sentences, acquires a current word position indicating a position of a current word, a next word position indicating a position of a next word, and all next word position candidates other than the next word position in each source language sentence corresponding to a current word position and a next word position in each target language sentence, using the word alignment information, acquires one or at least two features regarding a current word position, a next word position, and all next word position candidates in each source language sentence, and determines a weight vector so as to maximize the entropy, using the acquired features, thereby acquiring the weight vector; and

a weight vector accumulating unit that accumulates the weight vector acquired by the learning unit, in the weight vector storage unit.

8. A translation word order information output method, using a storage medium having a sentence storage unit in which a source language sentence, which is a sentence in a source language that is to be translated, is stored, and a weight vector storage unit in which a weight vector indicating a weight of each element of a vector is stored, and realized by a receiving unit, a candidate acquiring unit, a vector acquiring unit, a probability information acquiring unit, and an output unit, the method comprising:

a receiving step of the receiving unit receiving a current word position, which is one word position in the source language sentence and is a position of a word that is currently being translated;

a candidate acquiring step of the candidate acquiring unit acquiring the current word position and one or more next word position candidates, each of which is a position of a word that is a candidate for a word that is to be translated following the current word, from the source language sentence;

a vector acquiring step of the vector acquiring unit acquiring a vector having two or more elements, using a current word indicated by the current word position, a next word candidate indicated by each of the next word position candidates, and the source language sentence;

a probability information acquiring step of the probability information acquiring unit acquiring, for each of the one or more next word position candidates acquired in the candidate acquiring step, probability information regarding a probability that a word at that next word position candidate is a next word that is to be translated following the current word, using the vector acquired in the vector acquiring step and the weight vector; and

an output step of the output unit outputting the probability information acquired in the probability information acquiring step.

9. A storage medium in which a program is stored,

the program causing the storage medium to have a sentence storage unit in which a source language sentence, which is a sentence in a source language that is to be translated, is stored, and a weight vector storage unit in which a weight vector indicating a weight of each element of a vector is stored, and

causing a computer to execute:

a receiving step of receiving a current word position, which is one word position in the source language sentence and is a position of a word that is currently being translated;

a candidate acquiring step of acquiring the current word position and one or more next word position candidates, each of which is a position of a word that is a candidate for a word that is to be translated following the current word, from the source language sentence;

a vector acquiring step of acquiring a vector having two or more elements, using a current word indicated by the current word position, a next word candidate indicated by each of the next word position candidates, and the source language sentence;

a probability information acquiring step of acquiring, for each of the one or more next word position candidates acquired in the candidate acquiring step, probability information regarding a probability that a word at that next word position candidate is a next word that is to be translated following the current word using the vector acquired in the vector acquiring step and the weight vector; and

an output step of outputting the probability information acquired in the probability information acquiring step.

~1

Translation word order information output apparatus

11 — Sentence storage unit

15 — Vector acquiring unit

14 — Candidate acquiring unit

151 — Source information acquiring part

152 — Vector acquiring part

13 — Receiving unit

16 — Probability information acquiring unit

12 — Weight vector storage unit

17 — Output unit

**FIG.1**

```
                    ┌─────────────┐
                    │    Start    │
                    └─────────────┘
                           │
   ①────────────────►      ◄──────────────────┐
                     ╱╲                        │
            S201   ╱    ╲                      │
                 ╱ Received╲    N              │
                ◄ current word ►───────────────┘
                 ╲ position? ╱
                   ╲      ╱
                     ╲  ╱
                      │Y
            S202      ▼
                ┌───────────────┐
                │ Read sentence │
                └───────────────┘
                      │
            S203      ▼
                ┌───────────────┐
                │    c ← 1      │
                └───────────────┘
                      │
      ┌──────────────►│        ┌─S204
      │         ┌───────────────┐
      │         │Acquire c-th next word│
      │         │ position candidate│
      │         └───────────────┘
      │               │
      │      S205      ▼
      │              ╱╲
      │            ╱    ╲      N
      │          ◄ Acquired? ►──────────────┐
      │            ╲    ╱                    │
      │              ╲╱              S212     ▼
      │               │Y        ┌──────────────────┐
      │      S206      ▼         │Output probability│
      │    ┌───────────────────┐ │  information of  │
      │    │Acquire source information│ │ each next word │
      │    └───────────────────┘ │position candidate│
      │      S207      │         └──────────────────┘
      │    ┌───────────────┐            │
      │    │ Acquire vector│            ▼
      │    └───────────────┘           ①
      │      S208      │
      │    ┌───────────────┐
      │    │Read weight vector│
      │    └───────────────┘
      │      S209      │
      │    ┌───────────────┐
      │    │Calculate probability│
      │    └───────────────┘
      │      S210      │
      │    ┌───────────────────┐
      │    │Temporarily store probability│
      │    │in association with c-th next│
      │    │ word position candidate│
      │    └───────────────────┘
      │      S211      │
      │    ┌───────────────┐
      │    │   c ← c + 1   │
      │    └───────────────┘
      │               │
      └───────────────┘
```

# FIG.2

| Label sequence ID | BOS 0 | kinou 1 | kare 2 | wa 3 | hon 4 | wo 5 | karita 6 | ga 7 | kanojo 8 | wa 9 | katta 10 | EOS 11 |
|---|---|---|---|---|---|---|---|---|---|---|---|---|
| 1 | 2 | 0 | | | | | | | | | | |
| 3 | | 0 | 2 | | | | | | | | | |
| 4 | | 0 | 1 | 2 | | | | | | | | |
| 5 | | 0 | 1 | 1 | 2 | | | | | | | |
| 6 | | 0 | 1 | 1 | 1 | 2 | | | | | | |
| 7 | | 0 | 1 | 1 | 1 | 1 | 2 | | | | | |
| 8 | | 0 | 1 | 1 | 1 | 1 | 1 | 2 | | | | |
| 9 | | 0 | 1 | 1 | 1 | 1 | 1 | 1 | 2 | | | |
| 10 | | 0 | 1 | 1 | 1 | 1 | 1 | 1 | 1 | 2 | | |
| 11 | | 0 | 1 | 1 | 1 | 1 | 1 | 1 | 1 | 1 | 2 | |

FIG.3

~2

Machine translation apparatus

21 — Word pair dictionary

1 — Translation word order information output apparatus

22 — Target language word acquiring unit

23 — Target language sentence constructing unit

24 — Target language sentence output unit

# FIG.4

~3

Learning apparatus

31 Parallel corpus storage unit

33 Learning unit

32 Word alignment information storage unit

34 Weight vector accumulating unit

12 Weight vector storage unit

# FIG.5

Start

S601
c ← 1

①

S602
Is there
c-th pair of original
and translated
sentences?

N

S610
Determine
weight vector

S611
Accumulate
weight vector

End

Y

S603
d ← 1

S604
Is there
d-th current word
?

N

Y

S605
Acquire current word
position and next
word position in target
language sentence

S609
c ← c + 1

①

S606
Acquire current word
position, next word position,
and all next word position
candidates in source
language sentence

S607
Acquire feature

S608
d ← d + 1

**FIG.6**

| Distortion limit | Japanese-English | | | | Chinese-English | | | |
|---|---|---|---|---|---|---|---|---|
| | 10 | 20 | 30 | ∞ | 10 | 20 | 30 | ∞ |
| LINEAR | 27.98 | 27.74 | 27.75 | 27.30 | 29.18 | 28.74 | 28.31 | 28.33 |
| LINEAR+LEX | 30.25 | 30.37 | 30.17 | 29.98 | 30.81 | 30.24 | 30.16 | 30.13 |
| 9-CLASS | 30.74 | 30.98 | 30.92 | 30.75 | 31.80 | 31.56 | 31.31 | 30.84 |
| PAIR | 31.62 | 32.36 | 31.96 | 32.03 | 32.51 | 32.30 | 32.25 | 32.32 |
| SEQUENCE | 32.02 | 32.96 | **33.29** | 32.81 | **33.41** | **33.44** | **33.35** | **33.41** |

# FIG.7

FIG.8

**FIG.9**

**FIG.10**

Position (NP) where translation
is to be performed next

Position (CP) where translation
was performed last

Input sentence | *kinou **kare** wa pari de hon wo katta*

Translated sentence
that is being generated | **he** bought books in Paris yesterday

Already generated word    Word that is to be generated next

(Translated sentence is continuously generated from left to right)

# FIG.11

Phrase

| Japanese | *kare wa* | *suguni* | *hon wo* | *katta* |

| English | he | immediately | bought | books |

monotone    discontinuous    swap

# FIG.12

(1) $kinou^1$ $\textbf{\textit{kare}}^2$ $wa^3$ $pari^4$ $de^5$ $hon^6$ $wo^7$ $katta^8$ ○

he bought books in Paris yesterday

(2) $kinou^1$ $\textbf{\textit{kare}}^2$ $ha^3$ $pari^4$ $de^5$ $ni^6$ $satsu^7$ $hon^8$ $wo^9$ $katta^{10}$ ○

he bought two books in Paris yesterday

NP cannot be accurately estimated only with word at CP and its surrounding words
→Need to simultaneously consider word at CP and word at NP candidate

(3) $kinou^1$ $\textbf{\textit{kare}}^2$ $ha^3$ $hon^4$ $wo^5$ $karita^6$ $ga^7$ $kanojo^8$ $wa^9$ $katta^{10}$ ○ ✕

he borrowed books yesterday but she bought

(4) $kinou^1$ $\textbf{\textit{kare}}^2$ $ha^3$ $hon^4$ $wo^5$ $katta^6$ $ga^7$ $kanojo^8$ $ha^9$ $karita^{10}$ ○ ✕

he bought books yesterday but she borrowed

Accurate estimation cannot be performed only with word at CP and word at NP candidate
→Need to consider relative word order

(5) $\textbf{\textit{kinou}}^1$ $\textbf{\textit{kare}}^2$ $ha^3$ $kanojo^4$ $ga^5$ $katta^6$ $hon^7$ $wo^8$ $karita^9$ ✕ ○

yesterday he borrowed books that she bought

It is not always correct to select nearby word
→Need to consider words surrounding CP and NP candidate (context)

**FIG.13**

## INTERNATIONAL SEARCH REPORT

| | International application No. |
|---|---|
| | PCT/JP2014/063387 |

**A. CLASSIFICATION OF SUBJECT MATTER**
*G06F17/28*(2006.01)i

According to International Patent Classification (IPC) or to both national classification and IPC

**B. FIELDS SEARCHED**

Minimum documentation searched (classification system followed by classification symbols)
G06F17/28

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Kazuteru OHASHI et al., "Ku no Hon'yaku Junjo Pattern o Koryo shita Tokeiteki Kikai Hon'yaku Model", Proceedings of the 12th Annual Meeting of the Association for Natural Language Processing, 13 March 2006 (13.03.2006), pages 857 to 860 | 1-9 |
| A | JP 2007-317000 A  (Nippon Telegraph and Telephone Corp.), 06 December 2007 (06.12.2007), entire text; all drawings (Family: none) | 1-9 |

[X] Further documents are listed in the continuation of Box C.    [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 August, 2014 (08.08.14) | 26 August, 2014 (26.08.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

33

**INTERNATIONAL SEARCH REPORT**

International application No.

PCT/JP2014/063387

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2007/068123 A1 (NATIONAL RESEARCH COUNCIL OF CANADA et al.), 21 June 2007 (21.06.2007), entire text; all drawings (Family: none) | 1-9 |
| A | US 2008/0319736 A1 (Toutanova et al.), 25 December 2008 (25.12.2008), entire text; all drawings (Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A unigram orientation model for statistical machine translation. **CHRISTOPH TILLMAN.** HLT-NAACL 2004: Short Papers. Association for Computational Linguistics, 2004, 101-104
- Improved models of distortion cost for statistical machine translation. **SPENCE GREEN ; MICHEL GALLEY ; CHRISTOPHER D. MANNING.** Human Language Technologies: The 2010 Annual Conference of the North American Chapter of the Association for Computational Linguistics. Association for Computational Linguistics, June 2010, 867-875
- **D.C. LIU ; J. NOCEDAL.** On the limited memory method for large scale optimization. *Mathematical Programming B,* 1989, vol. 45 (3), 503-528
- **STANLEY F. CHEN ; RONALD ROSENFELD.** A Gaussian prior for smoothing maximum entropy models. *Technical report,* 1999
- **ISAO GOTO ; BIN LU ; KA PO CHOW ; EIICHIRO SUMITA ; BENJAMIN K. TSOU.** Overview of the patent machine translation task at the NTCIR-9 workshop. *Proceedings of NTCIR-9,* 2011, 559-578
- Moses: Open source toolkit for statistical machine translation. **PHILIPP KOEHN ; HIEU HOANG ; ALEXANDRA BIRCH ; CHRIS CALLISON-BURCH ; MARCELLO FEDERICO ; NICOLA BERTOLDI ; BROOKE COWAN ; WADE SHEN ; CHRISTINE MORAN ; RICHARD ZENS.** Proceedings of the 45th Annual Meeting of the Association for Computational Linguistics Companion Volume Proceedings of the Demo and Poster Sessions. Association for Computational Linguistics, June 2007, 177-180
- Improved models of distortion cost for statistical machine translation. **SPENCE GREEN ; MICHEL GALLEY ; CHRISTOPHER D. MANNING.** Human Language Technologies: The 2010 Annual Conference of the North American Chapter of the Association for Computational Linguistics. Association for Computational Linguistics, June 2010, 867-875